# EUROPEAN PATENT APPLICATION

(11) **EP 4 811 899 A1**
(43) Date of publication of application: **23.09.2026**
(21) Application number: 23958646.4
(22) Date of filing: 17.11.2023
(51) Int. Cl.: H04W 72/0446

(54) **COMMUNICATION METHODS, STATION DEVICES, ACCESS POINT DEVICES, AND COMMUNICATION SYSTEM**

(71) Applicant: Beijing Xiaomi Mobile Software Co., Ltd., Beijing 100085 (CN)
(72) Inventor: CHENG, Yajun, Beijing 100085 (CN)
(74) Representative: Gunzelmann, Rainer
(86) International application number: PCT/CN2023/132402
(87) International publication number: WO 2025/102373

(57) **Abstract**

Embodiments of the present disclosure relate to communication methods, station devices, access point devices, and a communication system. A communication method is applied to a first station device (STA), and comprises: determining and sending a first radio frame, the first radio frame comprising first identification information and second identification information, the first identification information identifying whether the first STA supports a reverse transmission opportunity sharing (TXS) mode, the second identification information identifying a minimum transmission duration threshold value or a reserved bit, and the minimum transmission duration threshold value being used for determining whether the first STA performs RTXS after receiving an RTXS request sent by an access point device (AP). Thus, the AP which has received the first radio frame can initiate the RTXS request to the first STA within a TXOP obtained by the first STA and, within a duration allocated by the first STA in response to the RTXS request, transmits temporary/bursty low-latency service data to another STA, thereby reducing the transmission delay of the temporary/bursty low-latency service data.

## Description

### TECHNICAL FIELD

The present disclosure relates to the field of communication technology, and specifically to a communication method, a station, an access point and a communication system.

### BACKGROUND

With the continuous development of a Wi-Fi^{™} technology, a next generation of the Wi-Fi technology has been proposed, i.e., Ultra High Reliability (UHR). In the UHR technology, an access point (AP) may share transmission time within a transmission opportunity (TXOP) with another AP. After obtaining shared transmission time, the other AP may further share the transmission time with an associated station (STA), so that the associated STA may perform a non-triggered based (Non-TB) sounding data transmission or a peer to peer (P2P) data transmission.

In scenarios where a STA acts as a TXOP holder, during uplink data transmission from the STA to an associated AP, if the AP needs to transmit temporary/burst low-latency service data to another communication device, the AP can only transmit the temporary/burst low-latency service data after a TXOP held by the current STA ends, resulting in a failure to transmit the low-latency service data in time. Therefore, a TXOP processing method needs to be provided to improve a TXOP sharing mechanism and support UHR.

### SUMMARY

Embodiments of the present disclosure provide a communication method, a station, an access point and a communication system, to further improve a TXOP sharing mechanism.

According to a first aspect of the embodiments of the present disclosure, a communication method is provided, performed by a first station (STA), including: determining a first frame, in which the first frame includes first indication information and second indication information, the first indication information indicates whether the first STA supports a reverse transmission opportunity sharing (RTXS) mode, the second indication information indicates a minimum transmission duration threshold or a reserved bit, and the minimum transmission duration threshold is used to determine whether the first STA performs RTXS after receiving an RTXS request sent by an access point (AP); and sending the first frame.

According to a second aspect of the embodiments of the present disclosure, a communication method is provided, performed by an AP, including: receiving a first frame sent by a first STA, in which the first frame includes first indication information and second indication information; in which the first indication information indicates whether the first STA supports an RTXS mode, the second indication information indicates a minimum transmission duration threshold or a reserved bit, and the minimum transmission duration threshold is used to determine whether the first STA performs RTXS after receiving an RTXS request sent by the AP.

According to a third aspect of the embodiments of the present disclosure, a STA is provided, which is a first STA and includes: a determining module, configured to determine a first frame, wherein the first frame comprises first indication information and second indication information, the first indication information indicates whether the first STA supports an RTXS mode, the second indication information indicates a minimum transmission duration threshold or a reserved bit, and the minimum transmission duration threshold is used to determine whether the first STA performs RTXS after receiving an RTXS request sent by an AP; and a sending module, configured to send the first frame.

According to a fourth aspect of the embodiments of the present disclosure, an AP is provided, including: a receiving module, configured to receive a first frame sent by a first STA, wherein the first frame comprises first indication information and second indication information; the first indication information indicates whether the first STA supports an RTXS mode, the second indication information indicates a minimum transmission duration threshold or a reserved bit, and the minimum transmission duration threshold is used to determine whether the first STA performs RTXS after receiving an RTXS request sent by the AP.

According to a fifth aspect of the embodiments of the present disclosure, a STA is provided, which is a first STA and includes one or more processors; in which the STA is configured to perform the communication method described in the embodiments of the present disclosure.

According to a sixth aspect of the embodiments of the present disclosure, an AP is provided, including one or more processors, in which the AP is configured to perform the communication method described in the embodiments of the present disclosure.

According to a seventh aspect of the embodiments of the present disclosure, a communication system is provided, including a first STA, an AP and a second STA. The first STA is configured to perform the communication method described in the first aspect of the embodiments of the present disclosure. The AP is configured to perform the communication method described in the second aspect of the embodiments of the present disclosure.

According to an eighth aspect of the embodiments of the present disclosure, a storage medium having instructions stored thereon is provided. When the instructions are running on a communication device, the communication device is caused to perform the communication method described in the first aspect of the embodiments of the present disclosure, or the communication method described in the second aspect of the embodiments of the present disclosure.

In the above embodiments, the first STA carries the first indication information and the second indication information through the first frame, in which the first indication information indicates whether the first STA supports the RTXS mode, the second indication information indicates the minimum transmission duration threshold or the reserved bit, the minimum transmission duration threshold is used to determine whether the first STA performs RTXS after receiving the RTXS request sent by the AP; and the first STA sends the first frame to the AP. In this way, the AP that receives the first frame may initiate an RTXS request to the first STA within a TXOP obtained by the first STA, and transmits temporary/burst low-latency service data to another STA within the time allocated by the first STA in response to the RTXS request, so that a transmission latency of the temporary/burst low-latency service data may be reduced.

Additional aspects and advantages of the embodiments of the present disclosure will be partially given in the description below, which will become apparent from the description below, or will be learned through the practice of the present disclosure.

### BRIEF DESCRIPTION OF THE DRAWINGS

In order to more clearly illustrate technical solutions in the embodiments of the present disclosure, the drawings required for describing the embodiments are introduced below. The following drawings are only some embodiments of the present disclosure and do not impose specific limitations on the protection scope of the present disclosure.
FIG. 1 is a schematic diagram of a communication system according to an embodiment of the present disclosure;
FIG. 2 is an interactive diagram of a communication method according to an embodiment of the present disclosure;
FIG. 3 is an interactive diagram of a communication method according to an embodiment of the present disclosure;
FIG. 4 is an interactive diagram of a communication method according to an embodiment of the present disclosure;
FIG. 5 is a flowchart of a communication method according to an embodiment of the present disclosure;
FIG. 6 is a flowchart of a communication method according to an embodiment of the present disclosure;
FIG. 7 is a block diagram of a first STA according to an embodiment of the present disclosure;
FIG. 8 is a block diagram of an AP according to an embodiment of the present disclosure;
FIG. 9 is a block diagram of a terminal according to an embodiment of the present disclosure; and
FIG. 10 is a block diagram of a chip according to an embodiment of the present disclosure.

### DETAILED DESCRIPTION

Embodiments of the present disclosure propose a communication method, a station, an access point and a communication system.

According to a first aspect of the embodiments of the present disclosure, there is provided a communication method, performed by a first STA, including:
determining a first frame, in which the first frame includes first indication information and second indication information;
in which the first indication information indicates whether the first STA supports a reverse transmission opportunity sharing (RTXS) mode, the second indication information indicates a minimum transmission duration threshold or a reserved bit, and the minimum transmission duration threshold is used to determine whether the first STA performs RTXS after receiving an RTXS request sent by an access point (AP); and
sending the first frame.

In the above embodiments, the first STA carries the first indication information and the second indication information through the first frame, in which the first indication information indicates whether the first STA supports the RTXS mode, the second indication information indicates the minimum transmission duration threshold or the reserved bit, the minimum transmission duration threshold is used to determine whether the first STA performs RTXS after receiving the RTXS request sent by the AP; and the first STA sends the first frame to the AP. In this way, the AP may be aware of whether the first STA supports the RTXS mode and the minimum transmission duration threshold for performing RTXS set for the first STA. In a case where the first STA and the AP support the RTXS mode and the first STA is set with the minimum transmission duration threshold, the AP may initiate an RTXS request for transmitting temporary/burst low-latency service data to another STA to the first STA within a TXOP obtained by the first STA, and transmits the temporary/burst low-latency service data to the other STA in a case where the first STA shares duration from the TXOP with the AP, so that a transmission latency of the temporary/burst low-latency service data may be reduced.

In combination with some embodiments of the first aspect, the first frame further includes third indication information, in which the third indication information indicates whether the first STA is set with the minimum transmission duration threshold;
the third indication information is set to be a first parameter value, and the first frame includes the second indication information;
or the third indication information is set to be a second parameter value, and the first frame does not include the second indication information.

In the above embodiments, when the third indication information is set to be 1, it indicates that the first frame includes the second indication information, that is, the first STA is set with the minimum transmission duration threshold; when the third indication information is set to be 0, it indicates that the first frame does not include the second indication information, that is, the first STA is not set with the minimum transmission duration threshold. In this way, it is possible to determine whether the first STA is set with the minimum transmission duration threshold only by using a specific parameter value of the third indication information, so that signaling overhead may be saved.

In combination with some embodiments of the first aspect, in some embodiments, the method further includes:
receiving a second frame, in which the second frame includes fourth indication information, and the fourth indication information indicates whether the AP supports the RTXS mode.

In the above embodiments, the AP carries the fourth indication information through the second frame, in which the fourth indication information indicates whether the AP supports the RTXS mode; and the AP sends the first frame to the first STA. In this way, the first STA may be aware of whether the AP supports the RTXS mode. When the AP and the first STA support the RTXS mode and the first STA is set with the minimum transmission duration threshold, during a data transmission performed by the first STA with the AP within a TXOP obtained by the first STA, the first STA determines whether to respond to the RTXS request initiated by the AP to transmit temporary/burst low-latency service data to another communication device, so that a transmission latency of the temporary/burst low-latency service data may be reduced.

In combination with some embodiments of the first aspect, in some embodiments, the method further includes:
in a case where both the first STA and the AP support the RTXS mode, receiving the RTXS request sent by the AP within a TXOP obtained by the first STA, in which the RTXS request includes a first duration required for the AP to perform a low-latency service transmission with a second STA; and
determining whether to share a transmission duration with the AP;
in which in a case where a first remaining transmission duration within the TXOP is greater than the minimum transmission duration threshold, it is determined to share the transmission duration with the AP;
in a case where the first remaining transmission duration is less than or equal to the minimum transmission duration threshold, it is determined not to share the transmission duration with the AP.

In the above embodiments, the reverse TXOP request includes the first duration required for the AP to perform the low-latency service transmission with the second STA. When both the first STA and the AP support the RTXS mode, the AP initiates the RTXS request to the first STA within a TXOP obtained by the first STA. The first STA may determine whether to share the transmission duration with the AP based on a size relationship between the first remaining transmission duration within the TXOP and the minimum transmission duration threshold, so that a TXOP holder (first STA) is prevented from blindly responding to the RTXS request initiated by the AP, which results in a waste of communication resources.

In combination with some embodiments of the first aspect, in some embodiments, in a case of determining to share the transmission duration with the AP, determining a third frame, in which the third frame includes fifth indication information, and the fifth indication information indicates a first transmission duration shared by the first STA with the AP; and
sending the third frame to instruct the AP to perform the low-latency service transmission with the second STA within the first transmission duration;
in which the minimum transmission duration threshold includes at least a sum of a second duration required to send the third frame, a third duration required for the AP to send a request to send (RTS) frame to the second STA, a fourth duration required for the second STA to send a clear to send (CTS) frame to the AP, and three short inter-frame spaces (SIFSs).

In the above embodiments, by setting the minimum transmission duration threshold to at least include the sum of the second duration required for the first STA to send the third frame to the AP, the third duration required for the AP to send the RTS frame to the second STA, the fourth duration required for the second STA to send the CTS frame to the AP, and three SIFSs, the minimum transmission duration threshold is determined as the basis of whether to share the first transmission duration with the AP, which may ensure that a necessary communication process when the AP and the second STA perform a low-latency service transmission may be carried out, and interruption of the low-latency service transmission may be avoided. Further, when the first STA determines that the first remaining transmission duration is greater than the minimum transmission duration threshold, the first transmission duration is shared with the AP, which may reduce a transmission latency of the low-latency service data while satisfying the necessary communication process when the AP and the second STA perform the low-latency service transmission.

In combination with some embodiments of the first aspect, in some embodiments, the first remaining transmission duration is greater than or equal to the second transmission duration, and the first transmission duration is the second transmission duration;
or the first remaining transmission duration is less than the second transmission duration, and the first transmission duration is the first remaining transmission duration;
in which the second transmission duration includes at least a sum of the first duration, the second duration, the third duration, the fourth duration, a fifth duration required for the second STA to send an acknowledgement (ACK) frame to the AP, and four SIFSs.

In the above embodiments, the second transmission duration is set to include at least the sum of the first duration required for the AP to perform a low-latency service data transmission with the second STA, the second duration required for the first STA to send the third frame to the AP, the third duration required for the AP to send the RTS frame to the second STA, the fourth duration required for the second STA to send the CTS frame to the AP, the fifth duration required for the second STA to send the ACK frame to the AP, and four SIFSs. When the first remaining transmission duration is greater than or equal to the second transmission duration, the first transmission duration is set to be the second transmission duration; when the first remaining transmission duration is less than the second transmission duration, the first transmission duration is set to be the first remaining transmission duration. In this way, while ensuring that the second STA may receive low-latency service data sent by the AP, the duration for sending the low-latency service data to the second STA may be shared by the AP as much as possible, so as to reduce a transmission latency of the low-latency service data.

In combination with some embodiments of the first aspect, in some embodiments, the first indication information is carried in an ultra-high reliability medium access control (UHR MAC) capability information field of the first frame;
the UHR MAC capability information field is carried in a UHR capability element of the first frame;
in which the first indication information is set to be a third parameter value, and the first indication information indicates that the first STA supports the RTXS mode; or the first indication information is set to be a fourth parameter value, and the first indication information indicates that the first STA does not support the RTXS mode.

In the above embodiments, the UHR MAC capability information field is carried in the UHR capability element of the first frame, and the first indication information is carried in the UHR MAC capability information field. When the first indication information is set to be the third parameter value, it indicates that the first STA supports the RTXS mode; when the first indication information is set to be the fourth parameter value, it indicates that the first STA does not support the RTXS mode. In this way, whether the first STA supports the RTXS mode may be determined according to a specific parameter value of the first indication information, so that signaling overhead may be saved.

In combination with some embodiments of the first aspect, in some embodiments, the second indication information is carried in a UHR operation information field of the first frame;
the UHR operation information field is carried in a UHR operation element of the first frame.

In the above embodiments, when the third indication information indicates that the first STA is set with a minimum transmission duration, the UHR operation information field is carried in the UHR operation element of the first frame, and the second indication information is carried in the UHR operation information field, to indicate the minimum transmission duration set by the first STA. In this way, whether to perform RTXS may be determined according to the minimum transmission duration indicated by the second indication information, so that signaling overhead may be saved.

In combination with some embodiments of the first aspect, in some embodiments, the third indication information is carried in a UHR operation parameter field of the first frame;
the UHR operation parameter field is carried in a UHR operation element of the first frame.

In the above embodiments, the UHR operation parameter field is carried in the UHR operation element of the first frame, and the third indication information is carried in the UHR operation parameter field, to indicate whether the first STA is set with a minimum transmission duration. In this way, whether the first STA is set with the minimum transmission duration may be determined according to a specific parameter value of the third indication information, so that signaling overhead may be saved.

In combination with some embodiments of the first aspect, in some embodiments, after the first transmission duration is reached, the method further includes:
determining that there is still a remaining transmission duration within the TXOP, and continuing to perform a data transmission within a second remaining transmission duration;
determining that there is no remaining transmission duration within the TXOP, and reacquiring a TXOP;
in which the second remaining transmission duration is set to be a difference between the first remaining transmission duration and the first transmission duration.

In the above embodiments, after the first transmission duration is reached, it is confirmed again whether there is any remaining transmission duration within the TXOP, and if there is any remaining transmission duration within the TXOP, communication is continued within the remaining transmission duration; if there is no remaining transmission duration within the TXOP, a TXOP is reacquired. In this way, communication resources may be saved.

According to a second aspect of the embodiments of the present disclosure, there is provided a communication method, performed by an AP, including:
receiving a first frame sent by a first STA, in which the first frame includes first indication information and second indication information;
in which the first indication information indicates whether the first STA supports an RTXS mode, the second indication information indicates a minimum transmission duration threshold or a reserved bit, and the minimum transmission duration threshold is used to determine whether the first STA performs RTXS after receiving an RTXS request sent by the AP.

In combination with some embodiments of the second aspect, in some embodiments, the first frame further includes third indication information, in which the third indication information indicates whether the first STA is set with the minimum transmission duration threshold;
the third indication information is set to be a first parameter value, and the first frame includes the second indication information;
or the third indication information is set to be a second parameter value, and the first frame does not include the second indication information.

In combination with some embodiments of the second aspect, in some embodiments, the method further includes:
determining a second frame, in which the second frame includes fourth indication information, and the fourth indication information indicates whether the AP supports the RTXS mode; and
sending the second frame.

In combination with some embodiments of the second aspect, in some embodiments, the method further includes:
in a case where both the first STA and the AP support the RTXS mode, sending the RTXS request to the first STA within a TXOP obtained by the first STA to instruct the first STA to determine whether to share a transmission duration with the AP;
in which the RTXS request includes a first duration required for the AP to perform a low-latency service transmission with a second STA;
in which a first remaining transmission duration within the TXOP is greater than the minimum transmission duration threshold, the first STA determines to share the transmission duration with the AP;
or the first remaining transmission duration is less than or equal to the minimum transmission duration threshold, the first STA determines not to share the transmission duration with the AP.

In combination with some embodiments of the second aspect, in some embodiments, the method further includes:
receiving a third frame, in which the third frame includes fifth indication information, and the fifth indication information indicates a first transmission duration shared by the first STA with the AP; and
performing, by the AP, the low-latency service transmission with the second STA within the first transmission duration;
in which the minimum transmission duration threshold includes at least a sum of a second duration required to send the third frame, a third duration required for the AP to send a request to send (RTS) frame to the second STA, a fourth duration required for the second STA to send a clear to send (CTS) frame to the AP, and three short inter-frame spaces (SIFSs).

In combination with some embodiments of the second aspect, in some embodiments, the first remaining transmission duration is greater than or equal to the second transmission duration, and the first transmission duration is the second transmission duration;
or the first remaining transmission duration is less than the second transmission duration, and the first transmission duration is set to be the first remaining transmission duration;
in which the second transmission duration includes at least a sum of the first duration, the second duration, the third duration, the fourth duration, a fifth duration required for the second STA to send an acknowledgement (ACK) frame to the AP, and four SIFSs.

In combination with some embodiments of the second aspect, in some embodiments, performing the low-latency service transmission with the second STA within the second transmission duration includes:
determining a fourth frame, in which the fourth frame includes sixth indication information, the sixth indication information indicates a third transmission duration for the AP to perform the low-latency service transmission with the second STA;
in which the sixth indication information is carried in a first duration field of the fourth frame, and the third transmission duration is set to be a duration obtained by subtracting the third duration and an SIFS from the first transmission duration; and
sending the fourth frame to the second STA.

In the above embodiments, by setting the third transmission duration in the duration field of the fourth radio frame sent by the AP to the second STA, the second STA may be informed of the real-time remaining transmission duration in the first transmission duration.

In combination with some embodiments of the second aspect, in some embodiments, after sending the fourth frame to the second STA, the method further includes:
receiving a fifth frame sent by the second STA, in which the fifth frame includes seventh indication information, the seventh indication information indicates a fourth transmission duration for the AP to perform the low-latency service transmission with the second STA, and the seventh indication information is carried in a second duration field of the fifth frame;
in which the fourth transmission duration is set to be a duration obtained by subtracting the fourth duration and an SIFS from the third transmission duration.

In the above embodiments, by setting the fourth transmission duration in the duration field of the fifth radio frame sent by the second STA to the AP, the AP may be informed of the real-time remaining transmission duration in the first transmission duration.

In combination with some embodiments of the second aspect, in some embodiments, during the low-latency service transmission performed by the AP with the second STA, a further STA updates its network allocation vector (NAV) to be the fourth transmission duration;
the further STA is a STA other than the first STA and the second STA in a basic service set (BSS) where the first STA, the AP, and the second STA are located.

In the above embodiments, the further STA is a STA other than the first STA and the second STA in the BSS where the first STA, the AP, and the second STA are located; during the low-latency service transmission performed by the AP with the second STA, the NAV of the further STA is updated to the fourth transmission duration. In this way, it may be avoided that during the low-latency service transmission between the AP and the second STA, communication interference with the low-latency service transmission between the AP and the second STA (which results in contention conflicts) due to communication of the further STA occurs.

According to a third aspect of the embodiments of the present disclosure, a STA is provided, which is a first STA and includes at least one of a determining module or a sending module. The STA is configured to perform alternative implementations of the first aspect.

According to a fourth aspect of the embodiments of the present disclosure, an AP is provided, including: a receiving module. The AP is configured to perform alternative implementations of the second aspect.

According to a fifth aspect of the embodiments of the present disclosure, a STA is provided, which is a first STA and includes:
one or more processors;
in which the STA is configured to perform alternative implementations of the first aspect.

According to a sixth aspect of the embodiments of the present disclosure, an AP is provided, including:
one or more processors;
in which the AP is configured to perform alternative implementations of the second aspect.

According to a seventh aspect of the embodiments of the present disclosure, a communication system is provided, including: a first STA, an AP and a second STA. The first STA is configured to perform alternative implementations described in the first aspect. The AP is configured to perform alternative implementations described in the second aspect.

According to an eighth aspect of the embodiments of the present disclosure, a storage medium having instructions stored thereon is provided. When the instructions are running on a communication device, the communication device is caused to perform alternative implementations described in the first aspect, or the second aspect.

According to a ninth aspect of the embodiments of the present disclosure, a program product is provided. When the program product is executed by a communication device, the communication device is caused to perform the method described in alternative implementations of the first aspect, the second aspect.

According to a tenth aspect of the embodiments of the present disclosure, a computer program is provided. When the computer program is running on a computer, the computer is caused to perform the method described in alternative implementations of the first aspect, the second aspect.

According to an eleventh aspect of the embodiments of the present disclosure, a chip or a chip system is provided. The chip or chip system includes a processing circuit configured to perform the information processing the method described in alternative implementations of the first aspect, the second aspect.

It is understandable that the above-mentioned first STA, the AP, the communication system, the storage medium, the program product, the computer program, the chip or chip system are all used to execute the method proposed in the embodiments of the present disclosure. Therefore, regarding the beneficial effects that can be achieved, reference may be made to the beneficial effects in the corresponding method, which will not be repeated here.

The embodiments of the present disclosure provide a communication method, a STA, a terminal, an AP, and a communication system. In some embodiments, the terms such as communication method, information sending method, frame sending method etc. may be replaced with each other, and the terms such as information processing system, communication system, etc. may be replaced with each other.

The embodiments of the present disclosure are not exhaustive, but are only illustrative, and are not intended to be a specific limitation on the protection scope of the present disclosure. In the absence of contradiction, each step in a certain embodiment may be implemented as an independent embodiment, and respective steps may be arbitrarily combined. For example, a solution after removing some steps in a certain embodiment can also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referred to each other, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, "plurality" refers to two or more.

In some embodiments, the terms "at least one of", "one or more", "a plurality of", "multiple" etc. may be used interchangeably.

In some embodiments, descriptions such as "at least one of A, B", "A and/or B", "in one case, A; in another case, B", "in response to one case, A; in response to another case, B", etc. may include the following technical solutions according to situations: in some embodiments, A (i.e., A is executed independently of B); in some embodiments, B (i.e., B is executed independently of A); in some embodiments, one is selected from A and B to be executed (i.e., A and B are selectively executed); in some embodiments, A and B (i.e., both A and B are executed). When there are more branches such as A, B, C, etc., the above is applicable.

In some embodiments, descriptions "A or B", etc. such as may include the following technical solutions according to situations: in some embodiments, A (i.e., A is executed independently of B); in some embodiments, B (i.e., B is executed independently of A); in some embodiments, one is selected from A and B to be executed (i.e., A and B are selectively executed). When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" may be interpreted as directly carrying A or indirectly indicating A.

In some embodiments, the terms such as "in response to...", "in response to determining...", "in the case of...", "at the time of...", "when...", "if...", "provide that...", etc. may be used interchangeably.

In some embodiments, the terms such as "greater than", "greater than or equal to", "not less than", "more than", "more than or equal to", "not less than", "higher than", "higher than or equal to", "not lower than", and "above" may be replaced with each other, and the terms such as "less than", "less than or equal to", "not greater than", "less than", "less than or equal to", "no more than", "lower than", "lower than or equal to", "not higher than", and "below" may be used interchangeably.

In some embodiments, the apparatus and device may be interpreted as physical or virtual, and their names are not limited to the names recorded in the embodiments, which may be understood as "equipment", "device", "circuit", "network element", "node", "function", "unit", "section", "system", "network", "chip", "chip system", "entity", and "subject", etc. in some cases.

In some embodiments, the term "network" may be understood as apparatuses included in the network, such as an access network device, a core network device or the like.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

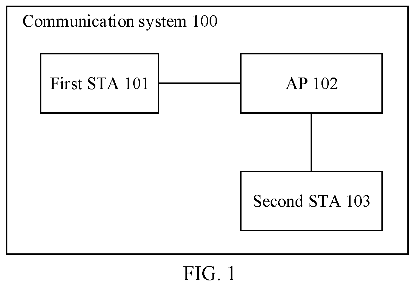

FIG. 1 is a schematic diagram of a communication system according to an embodiment of the present disclosure.

As shown in FIG. 1, the communication system 100 may include a first station (STA) 101, an access point (AP) 102, and a second STA 103.

In some embodiments, the first STA 101, the second STA 103, for example, may include a wireless communication chip, a wireless sensor or a wireless communication terminal supporting a Wi-Fi communication function. Optionally, the wireless communication terminal is, for example, a mobile phone, a wearable device, an Internet of Things device supporting a Wi-Fi communication function, a car with a Wi-Fi communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but the present disclosure is not limited thereto.

Specifically, the first STA 101 and the second STA 103 may be terminal devices or network devices with wireless fidelity (Wi-Fi) chips. Optionally, the first STA 101 and the second STA 103 may support multiple WLAN standards such as 802.11ax, 802.11be, 802.11ac, 802.11n, 802.11g, 802.11b, 802.11a, 802.11bf, 802.11bn, and support the next generation protocol 802.11, but the present disclosure is not limited thereto.

In some embodiments, the AP 102 may be an AP for a mobile terminal to enter a wired network. The AP is equivalent to a bridge connecting a wired network and a wireless network. Its main function is to connect various wireless network clients together and then connect the wireless network to the Ethernet. Specifically, the AP may be a terminal device or a network device with a Wi-Fi chip. Optionally, the AP may support multiple WLAN standards such as 802.11ax, 802.11be, 802.11ac, 802.11n, 802.11g, 802.11b and 802.11a, 802.11bf, 802.11bn, and support the next generation protocol 802.11, but the present disclosure is not limited to thereto.

Optionally, in the embodiments of the present disclosure, the AP and the STA may be devices supporting multiple connections, for example, may be respectively represented as an access point multi-link device (AP MLD) and a non-access point multi-link device (Non-AP MLD); the AP MLD may represent an access point supporting a multi-connection communication function, and the non-AP MLD may represent a station supporting a multi-connection communication function.

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the entities shown in FIG. 1, but are not limited thereto. The entities shown in FIG. 1 are examples, and the communication system may include all or part of the entities in FIG. 1, or may include other entities other than those shown in FIG. 1, and the number and form of the entities are arbitrary, each entity may be physical or virtual, and the connection relationships between the entities are examples, and the entities may be connected or disconnected, and the connection may be in any manner, which may be a direct connection or an indirect connection, and may be a wired connection or a wireless connection.

The various embodiments of the present disclosure may be applied to a wireless local area network (WLAN), such as a local area network using the 802.11 series of protocols. In a WLAN, a basic service set (BSS) is a basic component of the WLAN. A BSS network is composed of stations with certain associations within a specific coverage area. One case of association is that stations communicate directly with each other in an ad hoc network, which is called an independent BSS (IBSS). Another more common case is that in a BSS network, there is only one central station responsible for a full-time management of the BSS, which is called an AP, and other stations in the BSS network that are not the AP are called terminals, also called non-AP STAs. The AP and the non-AP STA are collectively referred to as STAs. When describing the STA, there is no need to distinguish between the AP and the non-AP STA. In the same BSS network, due to distance, transmission power, etc., a STA cannot detect another STA that are far away from it, and the two STAs are hidden nodes for each other.

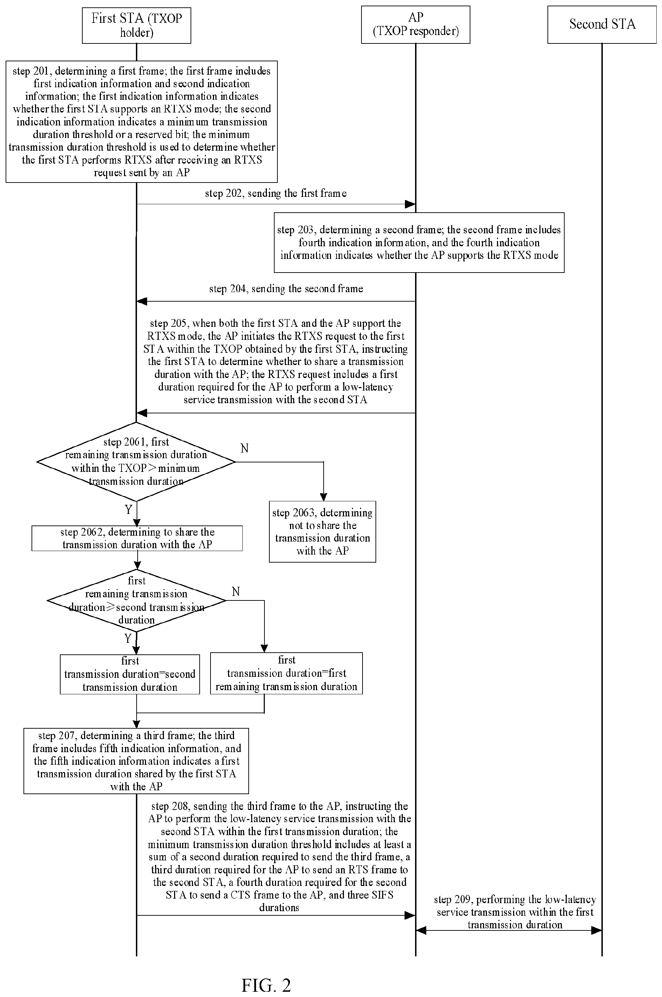

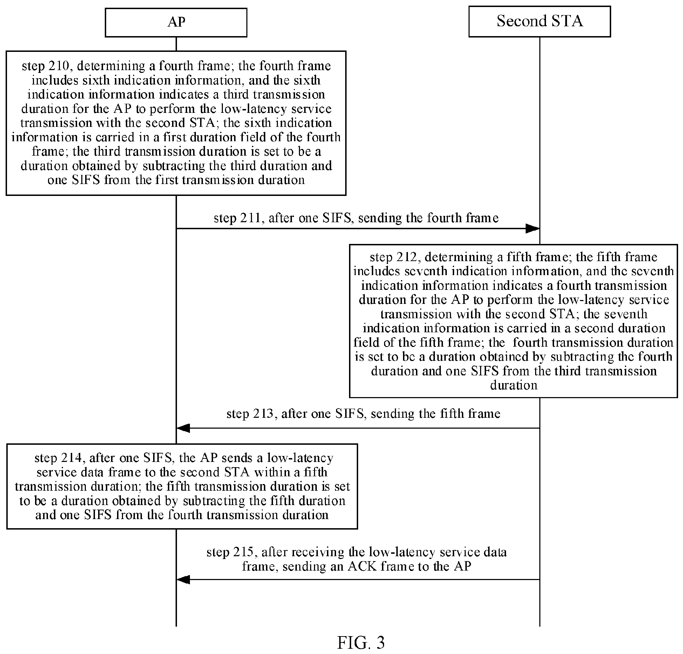

FIG. 2 is an interactive schematic diagram of a communication method according to an embodiment of the present disclosure. FIG. 3 is an interactive schematic diagram of a communication method according to an embodiment of the present disclosure. As shown in FIG. 2 and FIG. 3, the method includes the following steps.

At step 201, a first STA 101 determines a first frame. The first frame includes first indication information and second indication information.

The first indication information indicates whether the first STA 101 supports an RTXS (Reverse TXS, reverse transmission opportunity sharing; TXS stands for TXOP sharing, transmission opportunity sharing; TXOP stands for transmission opportunity) mode. The second indication information indicates a minimum transmission duration threshold (Reverse TXS MinThreshold) or a reserved bit. The minimum transmission duration threshold is used to determine whether the first STA 101 performs RTXS after receiving an RTXS request sent by an AP 102.

Reducing a data transmission latency of low-latency communication service is one of main goals of the next-generation Wi-Fi standard working group 802.11bn. For deterministic or periodic low-latency communication service data, an R-TWT mechanism proposed by 802.11be may effectively ensure a timely transmission of low-latency communication service data. However, when the AP or the STA faces some temporary or bursty low-latency service data, the R-TWT mechanism is no longer applicable. When the STA acts as a TXOP holder, during a process of sending data to its associated STA1, if the STA1 has uplink or P2P low-latency communication service cached on the STA1 side, the AP may trigger a TXS process and allocate part of the time within its reserved TXOP to the STA1. The STA1 uses the allocated TXOP to send the low-latency service to the AP or the STA corresponding to the P2P link in a timely manner.

Because in a TXOP, only the TXOP holder may actively send data, and other devices may only receive data or send response frames for their received data. If the STA acts as the TXOP holder, during a process of the STA sending uplink data to the associated AP, when the AP has temporary/burst low-latency communication service data to transmit to other communication devices, other communication devices will have the opportunity to transmit the temporary/burst low-latency service data with the AP only after the TXOP held by the STA ends, resulting in the inability to transmit the temporary/burst low-latency service in time.

When the remaining TXOP time held by the STA is too short to respond to the RTXS initiated by the AP, or the remaining TXOP cannot meet the temporary/burst low-latency service transmission, signaling is required to standardize and improve the RTXS procedure.

Optionally, the first frame may include at least one of a Probe Request (probe request frame), an Association Request (association request frame) or a Reassociation Request (reassociation request frame).

In some embodiments, the first indication information is carried in a UHR MAC (Ultra-High Reliability Medium Access Control) capability information (UHR MAC Capabilities Information) field of the first frame.

The UHR MAC capability information field is carried in a UHR capability element (UHR Capabilities element) of the first frame.

The first indication information is set to be a third parameter value, and the first indication information indicates that the first STA 101 supports the RTXS mode. Or the first indication information is set to be a fourth parameter value, and the first indication information indicates that the first STA 101 does not support the RTXS mode.

Optionally, regarding the format of the UHR Capabilities element, reference may be made to Table 1.

**Table 1**

| Information content | Element ID | Length | ...... | UHR MAC Capabilities Information | ...... |
|---|---|---|---|---|---|
| Octets | 1 | 1 | ...... | 1 | ...... |

Referring to Table 1, the UHR Capabilities element includes a UHR MAC Capabilities Information field.

Optionally, a Reverse TXOP Sharing Mode Support subfield may be set in the UHR MAC Capabilities Information field, and the Reverse TXOP Sharing Mode Support subfield may be used as the first indication information.

As an example, the third parameter value may be set to be 1 and the fourth parameter value may be set to be 0, that is, when the Reverse TXOP Sharing Mode Support subfield is set to be 1, it indicates that the first STA 101 supports the RTXS mode; when the Reverse TXOP Sharing Mode Support subfield is set to be 0, it indicates that the first STA 101 does not support the RTXS mode.

In the above embodiments, the UHR MAC Capabilities Information field is carried by the UHR Capabilities element of the first frame, and the first indication information is carried by the UHR MAC Capabilities Information field. When the first indication information is set to be the third parameter value, it indicates that the first STA 101 supports the RTXS mode; when the first indication information is set to be the fourth parameter value, it indicates that the first STA 101 does not support the RTXS mode. In this way, whether the first STA 101 supports the RTXS mode may be determined according to a specific parameter value of the first indication information, so that signaling overhead may be saved.

In the above embodiments, the second indication information is optional. When the first STA 101 supports the RTXS mode and the minimum transmission duration threshold is set, the second indication information may be carried in the first frame; when the first STA 101 does not support the RTXS mode, or the first STA101 supports the RTXS mode but is not set with the minimum transmission duration threshold, the second indication information may not be carried in the first frame.

In some embodiments, the first frame further includes third indication information, and the third indication information indicates whether the first STA 101 is set with the minimum transmission duration threshold.

The third indication information is set to be a first parameter value, and the first frame includes the second indication information.

Or the third indication information is set to be a second parameter value, and the first frame does not include the second indication information.

As an example, the first parameter value may be set to be 1 and the second parameter value may be set to be 0, that is, when the third indication information is set to be 1, it indicates that the first frame includes the second indication information; when the third indication information is set to be 0, it indicates that the first frame does not include the second indication information.

In the above embodiments, when the third indication information is set to be 1, it indicates that the first frame includes the second indication information, that is, the first STA 101 is set with the minimum transmission duration threshold; when the third indication information is set to be 0, it indicates that the first frame does not include the second indication information, that is, the first STA 101 is not set with the minimum transmission duration threshold. In this way, it is possible to determine whether the first STA 101 is set with the minimum transmission duration threshold only by using a specific parameter value of the third indication information, so that signaling overhead may be saved.

In some embodiments, the second indication information is carried in a UHR Operation Information field of the first frame.

The UHR Operation Information field is carried in a UHR Operation element of the first frame.

In the above embodiments, when the third indication information indicates that the first STA 101 is set with a minimum transmission duration, the UHR Operation Information field is carried by the UHR Operation element of the first frame, and the second indication information is carried by the UHR Operation Information field, to indicate the minimum transmission duration set by the first STA 101. In this way, it may be determined whether to perform RTXS according to the minimum transmission duration indicated by the second indication information, so that signaling overhead may be saved.

In some embodiments, the third indication information is carried in a UHR operation parameter (UHR Operation Parameters) field of the first frame.

The UHR Operation Parameters field is carried in a UHR Operation element of the first frame.

Optionally, regarding the format of the UHR Operation element, reference may be made to Table 2.

**Table 2**

| Information content | Element ID | Length | ...... | UHR Operation Parameters | ...... | UHR Operation Information | ...... |
|---|---|---|---|---|---|---|---|
| Octets | 1 | 1 | ...... | 1 | ...... | Variable | ...... |

Referring to Table 2, the UHR Operation element includes a UHR Operation Parameters field and an optional UHR Operation Information field. The UHR Operation Parameters field occupies 1 octet in the UHR Operation element.

In the above embodiments, the UHR Operation Parameters field is carried by the UHR Operation element of the first frame, and the third indication information is carried by the UHR Operation Parameters field, to indicate whether the first STA 101 is set with the minimum transmission duration. In this way, it may be determined whether the first STA 101 is set with the minimum transmission duration according to a specific parameter value of the third indication information, so that signaling overhead may be saved.

At step 202, the first STA 101 sends the first frame to the AP 102.

In the above embodiments, the first STA carries the first indication information and the second indication information through the first frame, in which the first indication information indicates whether the first STA 101 supports the RTXS mode, the second indication information indicates the minimum transmission duration threshold or the reserved bit; the minimum transmission duration threshold is used to determine whether the first STA 101 performs RTXS after receiving the RTXS request sent by the AP 102; and the first STA sends the first frame to the AP 102. In this way, the AP 102 may be aware of whether the first STA 101 supports the RTXS mode, and the minimum transmission duration threshold for RTXS set by the first STA 101. When both the first STA 101 and the AP 102support RTXS and the first STA 101 is set with the minimum transmission duration threshold, within the TXOP obtained by the first STA 101, an RTXS request for transmitting temporary/burst low-latency service data with another STA is initiated to the first STA 101; and when the first STA 101 shares the duration from the TXOP with the AP 102, the temporary/burst low-latency service data is transmitted to the other STA to reduce a transmission latency of the temporary/burst low-latency service data.

At step 203, the AP 102 determines a second frame. The second frame includes fourth indication information, and the fourth indication information indicates whether the AP 102 supports the RTXS mode.

Optionally, the second frame may include at least one of a Beacon (beacon frame), a Probe Response (probe response frame), an Association ReSponse (association response frame) or a Reassociation Response (reassociation response frame).

Optionally, referring to the above description of the first indication information carried by the first frame, in the embodiments of the present disclosure, the same method may be adopted to carry the fourth indication information by the second frame, which is not described in detail here, for example:
the fourth indication information may be carried in the UHR MAC Capabilities Information field of the second frame.

The UHR MAC Capabilities Information field is carried in a UHR Capabilities element of the second frame.

The fourth indication information is set to be a third parameter value, and the fourth indication information indicates that the AP 102 supports the RTXS mode; or the fourth indication information is set to be as fourth parameter value, and the fourth indication information indicates that the AP 102 does not support the RTXS mode.

Optionally, for the AP 102, regardless of whether it supports the RTXS mode, in the UHR Operation element in the second frame, a parameter value of the UHR Operation Parameters field is set to be 0, and the UHR Operation element does not include the UHR Operation Information field.

At step 204, the AP 102 sends the second frame to the first STA 101.

In the above embodiments, the AP 102 carries the fourth indication information through the second frame, in which the fourth indication information indicates whether the AP 102 supports the RTXS mode; and the AP 102 sends the first frame to the first STA 101. In this way, the first STA101 may be aware of whether the AP 102 supports RTXS, and when both the AP 102 and the first STA 101support RTXS and the minimum transmission duration threshold is set, during a data transmission between the first STA and the AP 102 within the TXOP obtained by the first STA 101, the first STA determines whether to respond to an RTXS request for transmitting temporary/burst low-latency service data to other communication devices initiated by the AP 102, so as to reduce a transmission latency of the temporary/burst low-latency service data.

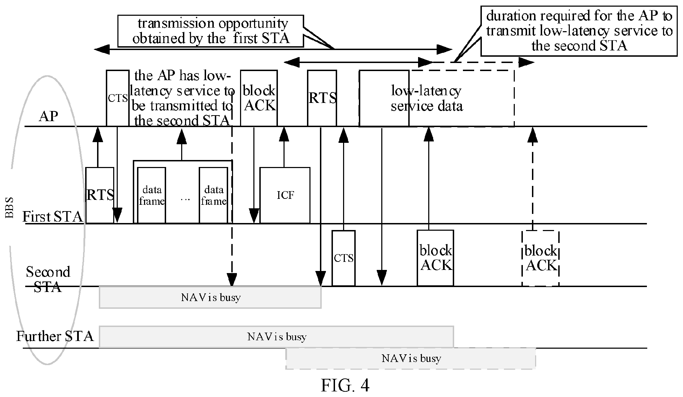

At step 205, referring to FIG. 4, when both the first STA 101 and the AP 102 support the RTXS mode, the AP 102 initiates the RTXS request to the first STA 101 within the TXOP obtained by the first STA 101, instructing the first STA 101 to determine whether to share a transmission duration with the AP 102.

The RTXS request includes a first duration required for the AP 102 to perform a low-latency service transmission with the second STA 103.

Optionally, referring to FIG. 4, within the TXOP obtained by the first STA 101, in the process of the first STA 101 sending uplink data to the AP 102, a network allocation vector (NAV) of a further STA other than the first STA 101 within a basic service set (BSS) where the first STA 101 and the AP 102 are located is set to be busy.

In the embodiments of the present disclosure, T1 may be used to represent the first duration.

Within the TXOP obtained by the first STA 101, during a process of the AP 102, as a TXOP responder, receiving uplink data sent by the first STA 101, if it is necessary to send temporary/burst low-latency service data to the second STA 103, the AP 102 may initiate an RTXS request to the first STA 101 to obtain a transmission opportunity to send the temporary/burst low-latency service data to the second STA 103, so that a transmission latency of the temporary/burst low-latency service data may be reduced.

At step 206, the first STA 101 determines whether to share a transmission duration with the AP 102.

In some embodiments, step 206 may include step 2061 and step 2062, or step 2061 and step 2063.

At step 2061, it is determined whether a first remaining transmission duration within the TXOP is greater than the minimum transmission duration threshold.

If the first remaining transmission duration is greater than the minimum transmission duration threshold, step 2062 is executed; if the first remaining transmission duration is less than or equal to the minimum transmission duration threshold, step 2063 is executed.

At step 2062, it is determined to share the transmission duration with the AP 102, and step 207 is executed.

At step 2063, it is determined not to share the transmission duration with AP102.

As an example, T2 may be used to represent the first remaining transmission duration within the TXOP.

If T2>minimum transmission duration threshold, the first STA 101 determines to share the transmission duration with the AP 102, that is, the first STA 101 may share the transmission opportunity with the AP 102 to instruct the AP 102 to send temporary/burst low-latency service data to the second STA 103 within the transmission opportunity.

If T2≤minimum transmission duration threshold, the first STA 101 determines not to share the transmission duration with the AP 102, i.e., rejecting the RTXS request initiated by the AP 102.

In the above embodiments, the reverse TXOP request includes the first duration required for the AP 102 to perform the low-latency service transmission with the second STA 103. When both the first STA 101 and the AP 102 support the RTXS mode, the AP 102 initiates the RTXS request to the first STA 101 within the TXOP obtained by the first STA 101. The first STA 101 may determine whether to share the transmission duration with the AP 102 based on a size relationship between the first remaining transmission duration within the TXOP and the minimum transmission duration threshold, so as to avoid the TXOP holder (first STA 101) from blindly responding to the RTXS initiated by the AP 102 (which results in a waste of communication resources).

At step 207, the first STA 101 determines a third frame. The third frame includes fifth indication information, and the fifth indication information indicates a first transmission duration shared by the first STA 101 with the AP 102.

Optionally, the third frame may be an initial control frame, for example, may be a MU-RTS TXS Trigger frame (multi-user request to send transmission opportunity sharing trigger frame; RTS stands for request to send; MU-RTS stands for multi-user request to send).

At step 208, the first STA 101 sends the third frame to the AP 102, instructing the AP 102 to perform the low-latency service transmission with the second STA 103 within the first transmission duration.

The minimum transmission duration threshold includes at least a sum of a second duration required to send the third frame, a third duration required for the AP 102 to send an RTS (Request to Send) frame to the second STA 103, a fourth duration required for the second STA 103 to send a CTS (Clear to Send) frame to the AP 102, and three short inter-frame space (SIFS) durations.

As an example, T3 may be used to represent the first transmission duration, T4 may be used to represent the second duration required to send the third frame, T5 may be used to represent the third duration required for the AP 102 to send the RTS frame to the second STA 103, and T6 may be used to represent the fourth duration required for the second STA 103 to send the CTS frame to the AP 102.

Within the TXOP obtained by the first STA 101, only when the first STA 101 shares the transmission duration with the AP 102, the AP 102 may send the low-latency service data to the second STA 103, and when the AP 102 sends the low-latency service data to the second STA 103, the following communication procedures must be exist: the first STA 101 shares the third frame with the AP 102, the AP 102 sends the RTS frame to the second STA 103, the second STA 103 sends the CTS frame to the AP 102, the AP 102 needs to wait for 1 SIFS before sending the RTS frame, and the second STA103 needs to wait for 1 SIFS before sending the CTS frame. In the embodiments of the present disclosure, the minimum transmission duration threshold may be set to be: T4+T5+T6+3*SIFS.

In the above embodiments, by setting the minimum transmission duration threshold to at least include the sum of the second duration required for the first STA 101 to send the third frame to the AP 102, the third duration required for the AP 102 to send the RTS frame to the second STA 103, the fourth duration required for the second STA 103 to send the CTS frame to the AP 102, and three SIFS durations, the minimum transmission duration threshold is determined as the basis of whether to share the first transmission duration with the AP 102, which may ensure that the necessary communication procedure when the AP 102 performs the low-latency service transmission with the second STA 103 may be carried out, and interruption of the low-latency service data transmission may be avoided. Further, when the first STA 101 determines that the first remaining transmission duration is greater than the minimum transmission duration threshold, the first STA 101 shares the first transmission duration with the AP 102, which may reduce a transmission latency of the low-latency service data while satisfying the necessary communication procedure when the AP 102 performs the low-latency service transmission with the second STA 103.

In some embodiments, the first remaining transmission duration is greater than or equal to the second transmission duration, and the first transmission duration is the second transmission duration.

In some embodiments, the first remaining transmission duration is less than the second transmission duration, and the first transmission duration is the first remaining transmission duration.

The second transmission duration at least includes a sum of the first duration, the second duration, the third duration, the fourth duration, a fifth duration required for the second STA 103 to send an ACK frame to the AP 102, and 4 SIFSs.

As an example, T7 may be used to represent the second transmission duration, and T8 may be used to represent the fifth duration required for the second STA 103 to send the ACK frame to the AP 102.

When the AP102 sends the low-latency service data to the second STA 103, in order to ensure that the second STA 103 can receive the low-latency service data sent by the AP 102, the AP 102 may be set to wait for the second STA 103 to send the ACK frame to it. In the embodiments of the present disclosure, T7 ≥ T1+T4+T5+T6+4*SIFS may be set.

When the first transmission duration is set to be the second transmission duration, a duration required for the AP 102 to send the low-latency service data itself to the second STA 103 is the first duration (see FIG. 4, during a data interaction between the AP 102 and the second STA 103, a transmission branch indicated by a block ACK frame is marked with a dotted line); when the second transmission duration is set to be the first remaining transmission duration, a duration required for the AP 102 to send the low-latency service data itself to the second STA 103 is a duration obtained by subtracting the second duration, the third duration, the fourth duration, the fifth duration and 4 SIFSs from the first remaining transmission duration (see FIG. 4, during the data interaction between the AP 102 and the second STA 103, a transmission branch indicated by the block ACK frame is marked with a solid line).

In the above embodiments, the second transmission duration is set to include at least the sum of the first duration required for the AP 102 to perform the low-latency service data transmission with the second STA 103, the second duration required for the first STA 101 to send the third frame to the AP 102, the third duration required for the AP 102 to send the RTS frame to the second STA 103, the fourth duration required for the second STA 103 to send the CTS frame to the AP 102, the fifth duration required for the second STA 103 to send the ACK frame to the AP 102, and four SIFSs. When the first remaining transmission duration is greater than or equal to the second transmission duration, the first transmission duration is set to be the second transmission duration; when the first remaining transmission duration is less than the second transmission duration, the first transmission duration is set to be the first remaining transmission duration. In this way, while ensuring that the second STA 103 receives the low-latency service data sent by the AP 102, the duration for sending the low-latency service data to the second STA 103 may be shared the AP 102 as much as possible, so that a transmission latency of the low-latency service data may be reduced.

At step 209, the AP 102 performs the low-latency service transmission with the second STA 103 within the first transmission duration.

In some embodiments, referring to FIG. 3, step 209 may specifically include steps 210 to 215.

At step 210, the AP 102 determines a fourth frame. The fourth frame includes sixth indication information, and the sixth indication information indicates a third transmission duration for the AP 102 to perform the low-latency service transmission with the second STA 103.

The sixth indication information is carried in a first duration field of the fourth frame.

The third transmission duration is set to be a duration obtained by subtracting the third duration and one SIFS from the first transmission duration.

Optionally, the fourth frame may include an RTS frame.

At step 211, after one SIFS, the AP 102 sends the fourth frame to the second STA 103.

In the above embodiments, by setting the third transmission duration in the Duration field of the RTS frame sent by the AP 102 to the second STA 103, the second STA 103 may be informed of the real-time remaining transmission duration in the first transmission duration.

At step 212, the second STA 103 determines a fifth frame. The fifth frame includes seventh indication information, and the seventh indication information indicates a fourth transmission duration for the AP 102 to perform the low-latency service transmission with the second STA 103; the seventh indication information is carried in a second duration field of the fifth frame.

The fourth transmission duration is set to be a duration obtained by subtracting the fourth duration and one SIFS from the third transmission duration.

Optionally, the fifth frame may include a CTS frame.

At step 213, after one SIFS, the second STA 103 sends the fifth frame to the AP 102.

In the above embodiments, by setting the fourth transmission duration in the Duration field of the CTS frame sent by the second STA 103 to the AP 102, the AP 102 may be informed of the real-time remaining transmission duration in the first transmission duration.

At step 214, after one SIFS, the AP 102 sends a low-latency service data frame to the second STA 103 within a fifth transmission duration. The fifth transmission duration is set to be a duration obtained by subtracting the fifth duration and one SIFS from the fourth transmission duration.

Optionally, the fifth transmission duration is a duration shared by the first STA 101 with the AP 102 and only used for the AP 102 to send the low-latency service data to the second STA 103.

At step 215, after receiving the low-latency service data frame, the second STA 103 sends an ACK frame (acknowledgement frame) or a block acknowledgment (Block ACK) frame to the AP 102 after one SIFS.

In some embodiments, referring to FIG. 4, during the low-latency service transmission between the AP 102 and the second STA 103, the other STA(s) updates its(their) NAV(s) to the fourth transmission duration.

The other STA may be a STA other than the first STA 101 and the second STA 103 within the BSS where the first STA 101, the AP 102, and the second STA 103 are located.

Optionally, the other STA updates its NAV to the fourth transmission duration, that is, the other STA is in a busy state during the fourth transmission duration.

In the above embodiments, the other STA may be a STA other than the first STA 101 and the second STA 103 within the BSS where the first STA 101, the AP 102 and the second STA 103 are located. During the low-latency service transmission between the AP 102 and the second STA 103, the NAV of the other STA is updated to the fourth transmission duration. In this way, during the low-latency service transmission between the AP 102 and the second STA 103, communication interference with the low-latency service transmission between the AP 102 and the second STA 103 (which results in contention conflicts) due to the communication of the other STA may be avoided.

Optionally, the first STA 101 does not perform a data transmission with the AP 102 within the first transmission duration, so as to avoid causing communication interference with the low-latency service transmission between the AP 102 and the second STA 103 and resulting in contention conflicts.

In the above embodiments, after the first transmission duration expires, the first STA 101 determines whether there is any remaining transmission duration within the TXOP.

If there is still a remaining transmission duration within the TXOP, the first STA 101 continues to perform the data transmission within a second remaining transmission duration; in which the second remaining transmission duration is set to be a difference between the first remaining transmission duration and the first transmission duration.

If there is no remaining transmission duration within the TXOP, the first STA 101 reacquires a TXOP.

Optionally, the first STA 101 may perform the data transmission with the AP 102 or a STA that has established a P2P (peer to peer) link with the first STA 101 within the second remaining transmission duration.

Optionally, the first STA 101 reacquires the TXOP, that is, competes for the channel again.

In the above embodiments, after the first transmission duration is reached, it is confirmed again whether there is any remaining transmission duration within the TXOP, and if there is any remaining transmission duration within the TXOP, communication is continued within the new remaining transmission duration; if there is no remaining transmission duration within the TXOP, the TXOP is reacquired. In this way, communication resources may be saved.

In some embodiments, the name of information or the like is not limited to the names described in embodiments. Terms such as "information", "message", "signal", "signaling", "report", "configuration", "indication", "instruction", "command", "channel", "parameter", "domain", "field", "symbol", "bit", "data", "program", and "chip" may be used interchangeably.

In some embodiments, terms such as "moment", "time point", "time", and "time position" may be interchangeable, and terms such as "duration", "period", "time window", "window", and "time" may be interchangeable.

In some embodiments, terms such as "wireless access scheme", "waveform", etc. may be used interchangeably.

In some embodiments, terms such as "certain", "preset", "default", "set", "indicated", "a certain", "any" and "first" may be used interchangeably. Terms such as "certain A", "preset A", "default A", "set A", "indicated A", "a certain A", "any A" and "first A" may be interpreted as A pre-defined in a protocol or the like, or as A obtained through setting, configuration, or indication, or as specific A, a certain A, any A, or first A, but are not limited to this.

In some embodiments, determination or judgment may be performed by a value represented by 1 bit (0 or 1), by a true or false value (Boolean value) represented by true or false, or by comparison of numerical values (for example, comparison with a predetermined value), but the present disclosure is not limited thereto.

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

The communication method according to the embodiments of the present disclosure may include at least one of above-mentioned steps and embodiments. For example, step 201 may be implemented as an independent embodiment, step 203 may be implemented as an independent embodiment, step 205 may be implemented as an independent embodiment, step 206 may be implemented as an independent embodiment, step 2061 may be implemented as an independent embodiment, step 207 may be implemented as an independent embodiment, and step 209 may be implemented as an independent embodiment; the combination of step 201 and step 202 may be implemented as an independent embodiment, the combination of step 203 and step 204 may be implemented as an independent embodiment, the combination of step 205 and step 206 may be implemented as an independent embodiment, the combination of step 205, step 2061, and step 2062 may be implemented as an independent embodiment, the combination of step 205, step 2061, and step 2063 may be implemented as an independent embodiment, and the combination of step 201, step 202, step 203, step 204, step 205 and step 206 may be implemented as an independent embodiment, the combination of step 201, step 202, step 203, step 204, step 205, step 2061 and step 2062 may be implemented as an independent embodiment, the combination of step 201, step 202, step 203, step 204, step 205, step 2061 and step 2063 may be implemented as an independent embodiment, the combination of step 207 and step 208 may be implemented as an independent embodiment, the combination of step 207, step 208 and step 209 may be implemented as an independent embodiment, the combination of step 207, step 208 and step 210, step 211, step 212, step 213, step 214, step 215 may be implemented as an independent embodiment, the combination of step 201, step 202, step 203, step 204, step 205, step 206 and step 207 may be implemented as an independent embodiment, the combination of step 201, step 202, step 203, step 204, step 205, step 2061, step 2062 and step 207 may be implemented as an independent embodiment, the combination of step 201, step 202, step 203, step 204, step 205, step 206, step 207 and step 208 may be implemented as an independent embodiment, the combination of step 201, step 202, step 203, step 204, step 205, step 2061, step 2062, step 207 and step 208 may be implemented as an independent embodiment, the combination of step 201, step 202, step 203, step 204, step 205, step 206, step 207, step 208 and step 209 may be implemented as an independent embodiment, the combination of step 201, step 202, step 203, step 204, step 205, step 2061, step 2062, step 207, step 208 and step 209 may be implemented as an independent embodiment, the combination of step 201, step 202, step 203, step 204, step 205, step 206, step 207, step 208 and step 210, step 211, step 212, step 213, step 214, step 215 may be implemented as an independent embodiment, the combination of step 201, step 202, step 203, step 204, step 205, step 2061, step 2062, step 207, step 208 and step 210, step 211, step 212, step 213, step 214, step 215 may be implemented as an independent embodiment, but the present disclosure is not limited thereto.

In some embodiments, reference may be made to other optional implementations recorded before or after the description corresponding to FIG. 4.

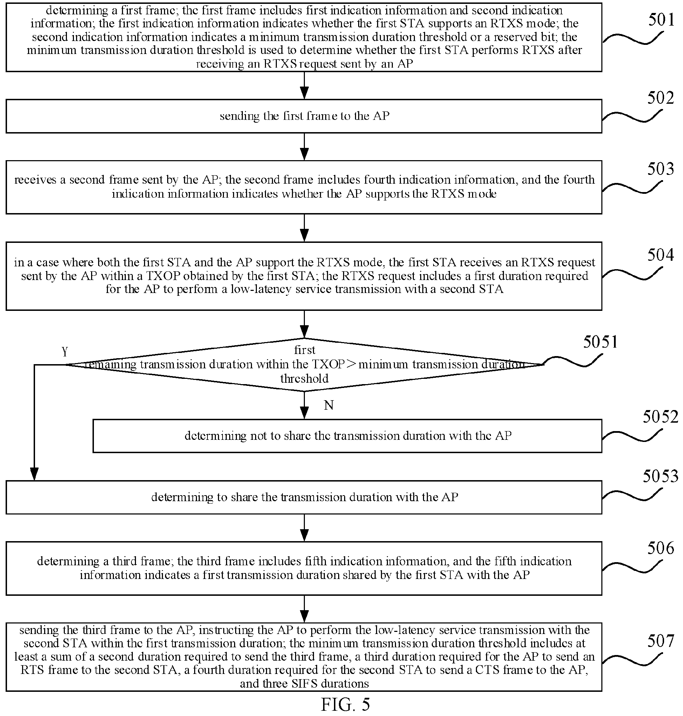

FIG. 5 is a flowchart of a communication method according to an embodiment of the present disclosure.

As shown in FIG. 5, the above method may be applied to a first STA 101, and the method includes the following steps.

At step 501, the first STA 101 determines a first frame. The first frame includes first indication information and second indication information.

The first indication information indicates whether the first STA 101 supports an RTXS mode. The second indication information indicates a minimum transmission duration threshold or a reserved bit. The minimum transmission duration threshold is used to determine whether the first STA 101 performs RTXS after receiving an RTXS request sent by an AP 102.

Regarding the optional implementation of step 501, reference may be made to the optional implementation of step 201 in FIG. 2 and other related parts of the embodiment involved in FIG. 2, which are not repeated in detail here.

In some embodiments, the first indication information is carried in a UHR MAC capability information field of the first frame.

The UHR MAC capability information field is carried in a UHR capability element of the first frame.

The first indication information is set to be a third parameter value, and the first indication information indicates that the first STA 101 supports the RTXS mode. Or the first indication information is set to be a fourth parameter value, and the first indication information indicates that the first STA 101 does not support the RTXS mode.

In some embodiments, the first frame further includes third indication information, and the third indication information indicates whether the first STA 101 is set with the minimum transmission duration threshold.

The third indication information is set to be a first parameter value, and the first frame includes the second indication information.

Or the third indication information is set to be a second parameter value, and the first frame does not include the second indication information.

In some embodiments, the second indication information is carried in a UHR Operation Information field of the first frame.

The UHR Operation Information field is carried in a UHR Operation element of the first frame.

At step 502, the first STA 101 sends the first frame to the AP 102.

Regarding the optional implementation of step 502, reference may be made to the optional implementation of step 202 in FIG. 2 and other related parts of the embodiment involved in FIG. 2, which are not repeated in detail here.

At step 503, the first STA 101 receives a second frame sent by the AP 102. The second frame includes fourth indication information, and the fourth indication information indicates whether the AP 102 supports the RTXS mode.

Regarding the optional implementation of step 503, reference may be made to the optional implementation of step 203 and step 204 in FIG. 2 and other related parts of the embodiment involved in FIG. 2, which are not repeated in detail here.

At step 504, in a case where both the first STA 101 and the AP 102 support the RTXS mode, the first STA 101 receives an RTXS request sent by the AP 102 within a TXOP obtained by the first STA 101. The RTXS request includes a first duration required for the AP 102 to perform a low-latency service transmission with a second STA 103.

Regarding the optional implementation of step 504, reference may be made to the optional implementation of step 205 in FIG. 2 and other related parts of the embodiment involved in FIG. 2, which are not repeated in detail here.

At step 505, the first STA 101 determines whether to share a transmission duration with the AP 102.

In some embodiments, step 505 may include step 5051 and step 5052, or step 5051 and step 5053.

At step 5051, it is determined whether a first remaining transmission duration within the TXOP is greater than the minimum transmission duration threshold.

If the first remaining transmission duration is greater than the minimum transmission duration threshold, step 5052 is executed; if the first remaining transmission duration is less than or equal to the minimum transmission duration threshold, step 5053 is executed.

At step 5052, it is determined to share the transmission duration with the AP 102, and step 506 is executed.

At step 5053, it is determined not to share the transmission duration with AP102.

Regarding the optional implementation of step 5051, reference may be made to the optional implementation of step 2061 in FIG. 2 and other related parts of the embodiment involved in FIG. 2, which are not repeated in detail here.

Regarding the optional implementation of step 5052, reference may be made to the optional implementation of step 2062 in FIG. 2 and other related parts of the embodiment involved in FIG. 2, which are not repeated in detail here.

Regarding the optional implementation of step 5053, reference may be made to the optional implementation of step 2063 in FIG. 2 and other related parts of the embodiment involved in FIG. 2, which are not repeated in detail here.

At step 506, the first STA 101 determines a third frame. The third frame includes fifth indication information, and the fifth indication information indicates a first transmission duration shared by the first STA 101 with the AP 102.

Regarding the optional implementation of step 506, reference may be made to the optional implementation of step 207 in FIG. 2 and other related parts of the embodiment involved in FIG. 2, which are not repeated in detail here.

At step 507, the first STA 101 sends the third frame to the AP 102, instructing the AP 102 to perform the low-latency service transmission with the second STA 103 within the first transmission duration.

The minimum transmission duration threshold includes at least a sum of a second duration required to send the third frame, a third duration required for the AP 102 to send an RTS frame to the second STA 103, a fourth duration required for the second STA 103 to send a CTS frame to the AP 102, and three SIFS durations.

In some embodiments, the first remaining transmission duration is greater than or equal to the second transmission duration, and the first transmission duration is the second transmission duration.

In some embodiments, the first remaining transmission duration is less than the second transmission duration, and the first transmission duration is the first remaining transmission duration.

The second transmission duration at least includes a sum of the first duration, the second duration, the third duration, the fourth duration, a fifth duration required for the second STA 103 to send an ACK frame to the AP 102, and 4 SIFSs.

In the above embodiments, after the first transmission duration is reached, the first STA 101 determines whether there is any remaining transmission duration within the TXOP.

If there is still a remaining transmission duration within the TXOP, the first STA 101 continues to perform a data transmission within a second remaining transmission duration; in which the second remaining transmission duration is set to be a difference between the first remaining transmission duration and the first transmission duration.

If there is no remaining transmission duration within the TXOP, the first STA 101 reacquires a TXOP.

Regarding the optional implementation of step 507, reference may be made to the optional implementation of step 208 in FIG. 2 and other related parts of the embodiment involved in FIG. 2, which are not repeated in detail here.

The communication method according to the embodiments of the present disclosure may include at least one of above-mentioned steps and embodiments. For example, step 501 may be implemented as an independent embodiment, step 503 may be implemented as an independent embodiment, step 504 may be implemented as an independent embodiment, step 505 may be implemented as an independent embodiment, step 5051 may be implemented as an independent embodiment, step 506 may be implemented as an independent embodiment; the combination of step 501 and step 502 may be implemented as an independent embodiment, the combination of step 501, step 502, step 503 and step 504 may be implemented as an independent embodiment, the combination of step 504 and step 505 may be implemented as an independent embodiment, the combination of step 504, step 5051, and step 5052 may be implemented as an independent embodiment, the combination of step 504, step 5051, and step 5053 may be implemented as an independent embodiment, and the combination of step 501, step 502, step 503, step 504, step 5051 and step 5052 may be implemented as an independent embodiment, the combination of step 501, step 502, step 503, step 504, step 5051, and step 5053 may be implemented as an independent embodiment, the combination of step 501, step 502, step 503, step 504, and step 505 may be implemented as an independent embodiment, the combination of step 501, step 502, step 503, step 504, and step 5051 may be implemented as an independent embodiment, the combination of step 501, step 502, step 503, step 504, step 5051, and step 5052 may be implemented as an independent embodiment, the combination of step 501, step 502, step 503, step 504, step 5051, and step 5053 may be implemented as an independent embodiment, the combination of step 501, step 502, step 503, step 504, step 5051, step 5052, and step 506 may be implemented as an independent embodiment, the combination of step 506 and step 507 may be implemented as an independent embodiment, the combination of step 5051, step 5052, step 506, and step 507 may be implemented as an independent embodiment, the combination of step 504, step 5051, step 5052, step 506, and step 507 may be implemented as an independent embodiment, the combination of step 501, step 502, step 503, step 504, step 5051, step 5052, step 506, and step 507 may be implemented as an independent embodiment, but the present disclosure is not limited thereto.

In some embodiments, reference may be made to other optional implementations recorded before or after the description corresponding to FIG. 5.

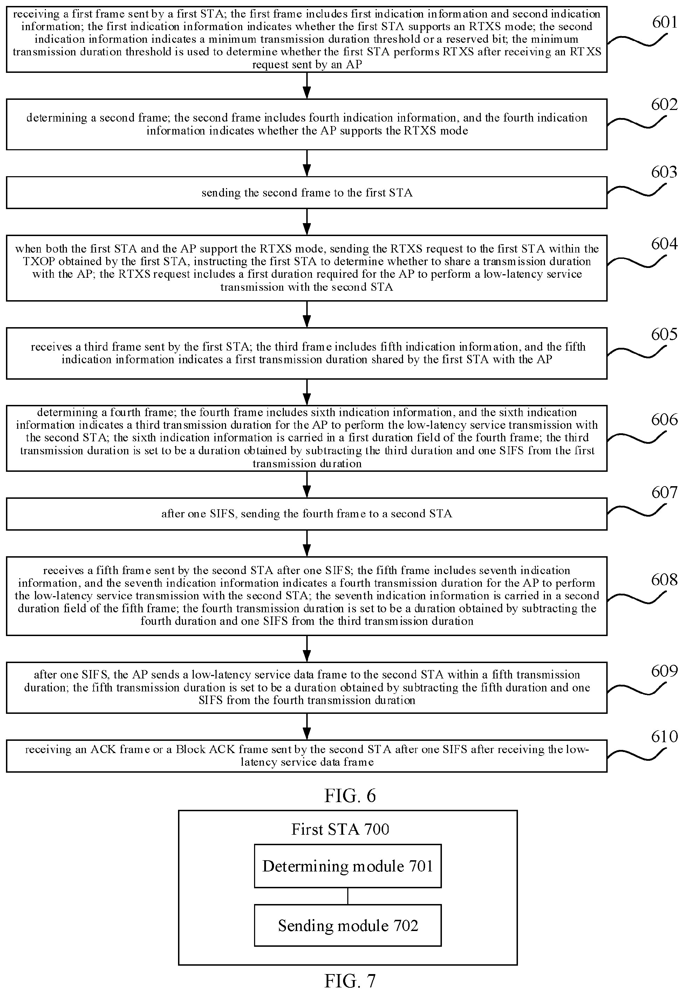

FIG. 6 is a flowchart of a communication method according to an embodiment of the present disclosure.

As shown in FIG. 6, the above method may be applied to an AP 102, and the method includes the following steps.

At step 601, the AP 102 receives a first frame sent by a first STA 101. The first frame includes first indication information and second indication information.

The first indication information indicates whether the first STA 101 supports an RTXS mode. The second indication information indicates a minimum transmission duration threshold or a reserved bit. The minimum transmission duration threshold is used to determine whether the first STA 101 performs RTXS after receiving an RTXS request sent by an AP 102.

In some embodiments, the first indication information is carried in a UHR MAC capability information field of the first frame.

The UHR MAC capability information field is carried in a UHR capability element of the first frame.

The first indication information is set to be a third parameter value, and the first indication information indicates that the first STA 101 supports the RTXS mode. Or the first indication information is set to be a fourth parameter value, and the first indication information indicates that the first STA 101 does not support the RTXS mode.

In some embodiments, the first frame further includes third indication information, and the third indication information indicates whether the first STA 101 is set with the minimum transmission duration threshold.

The third indication information is set to be a first parameter value, and the first frame includes the second indication information.

Or the third indication information is set to be a second parameter value, and the first frame does not include the second indication information.

In some embodiments, the second indication information is carried in a UHR Operation Information field of the first frame.

The UHR Operation Information field is carried in a UHR Operation element of the first frame.

Regarding the optional implementation of step 601, reference may be made to the optional implementation of step 201 and step 202 in FIG. 2 and other related parts of the embodiment involved in FIG. 2, which are not repeated in detail here.

At step 602, the AP 102 determines a second frame. The second frame includes fourth indication information, and the fourth indication information indicates whether the AP 102 supports the RTXS mode.

Regarding the optional implementation of step 602, reference may be made to the optional implementation of step 203 in FIG. 2 and other related parts of the embodiment involved in FIG. 2, which are not repeated in detail here.

At step 603, the AP 102 sends the second frame to the first STA 101.

Regarding the optional implementation of step 603, reference may be made to the optional implementation of step 204 in FIG. 2 and other related parts of the embodiment involved in FIG. 2, which are not repeated in detail here.

At step 604, in a case where both the first STA 101and the AP 102 support the RTXS mode, the AP 102 sends an RTXS request to the first STA 101 within a TXOP obtained by the first STA 101, to instruct the first STA 101 to determine whether to share a transmission duration with the AP 102.

The RTXS request includes a first duration required for the AP 102 to perform a low-latency service transmission with a second STA 103.

Regarding the optional implementation of step 604, reference may be made to the optional implementation of step 205, step 2061, step 2062, step 2063 in FIG. 2 and other related parts of the embodiment involved in FIG. 2, which are not repeated in detail here.

At step 605, the AP 102 receives a third frame sent by the first STA 101. The third frame includes fifth indication information, and the fifth indication information indicates a first transmission duration shared by the first STA 101 with the AP 102.

Regarding the optional implementation of step 605, reference may be made to the optional implementation of step 207 and step 208 in FIG. 2 and other related parts of the embodiment involved in FIG. 2, which are not repeated in detail here.

At step 606, the AP 102 determines a fourth frame. The fourth frame includes sixth indication information, and the sixth indication information indicates a third transmission duration for the AP 102 to perform a low-latency service transmission with the second STA 103.

The sixth indication information is carried in a first duration field of the fourth frame.

The third transmission duration is set to be a duration obtained by subtracting the third duration and one SIFS from the first transmission duration.

Regarding the optional implementation of step 606, reference may be made to the optional implementation of step 210 in FIG. 3 and other related parts of the embodiment involved in FIG. 3, which are not repeated in detail here.

At step 607, after one SIFS, the AP 102 sends the fourth frame to the second STA 103.

Regarding the optional implementation of step 607, reference may be made to the optional implementation of step 211 in FIG. 3 and other related parts of the embodiment involved in FIG. 3, which are not repeated in detail here.

At step 608, the AP 102 receives a fifth frame sent by the second STA 103 after one SIFS. The fifth frame includes seventh indication information, and the seventh indication information indicates a fourth transmission duration for the AP 102 to perform the low-latency service transmission with the second STA 103; the seventh indication information is carried in a second duration field of the fifth frame.

The fourth transmission duration is set to be a duration obtained by subtracting the fourth duration and one SIFS from the third transmission duration.

Regarding the optional implementation of step 608, reference may be made to the optional implementation of step 212 and step 213 in FIG. 3 and other related parts of the embodiment involved in FIG. 3, which are not repeated in detail here.

At step 609, after one SIFS, the AP 102 sends a low-latency service data frame to the second STA 103 within a fifth transmission duration. The fifth transmission duration is set to be a duration obtained by subtracting the fifth duration and one SIFS from the fourth transmission duration.

Regarding the optional implementation of step 609, reference may be made to the optional implementation of step 214 in FIG. 3 and other related parts of the embodiment involved in FIG. 3, which are not repeated in detail here.

At step 610, the AP 102 receives an ACK frame or a Block ACK frame sent by the second STA 103 after one SIFS after receiving the low-latency service data frame.

Regarding the optional implementation of step 610, reference may be made to the optional implementation of step 215 in FIG. 3 and other related parts of the embodiment involved in FIG. 3, which are not repeated in detail here.

In some embodiments, during the low-latency service transmission between the AP 102 and the second STA 103, the other STA(s) updates its(their) NAV(s) to the fourth transmission duration.

The other STA may be a STA other than the first STA 101 and the second STA 103 within a BSS where the first STA 101, the AP 102, and the second STA 103 are located.

The communication method according to the embodiments of the present disclosure may include at least one of above-mentioned steps and embodiments. For example, step 601 may be implemented as an independent embodiment, step 602 may be implemented as an independent embodiment, step 604 may be implemented as an independent embodiment, and step 605 may be implemented as an independent embodiment; the combination of step 602 and step 603 may be implemented as an independent embodiment, the combination of step 601, step 602 and step 603 may be implemented as an independent embodiment, the combination of step 601, step 602, step 603 and step 604 may be implemented as an independent embodiment, the combination of step 601, step 602, step 603, step 604 and step 605 may be implemented as an independent embodiment, the combination of step 601, step 602, step 603, step 604 and step 605 may be implemented as an independent embodiment, and the combination of step 601, step 602, step 603, step 604, step 605, step 607, step 608, step 609 and step 610 may be implemented as an independent embodiment, but the present disclosure is not limited thereto.

In some embodiments, reference may be made to other optional implementations recorded before or after the description corresponding to FIG. 6.

The embodiments of the present disclosure also include an apparatus for implementing any of the above methods, for example, an apparatus is disclosed, the above apparatus includes units or modules for implementing various steps performed by the terminal in any of the above methods. For another example, another apparatus is disclosed, including units or modules for implementing various steps performed by the network device (such as an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus may be implemented in the form of processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses may be realized in the form of processor calling software, or in the form of a hardware circuit, or in part by processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 7 is a schematic diagram of a first STA provided in an embodiment of the present disclosure. As shown in FIG. 7, the first STA 700 includes at least one of a determining module 701 or a sending module 702.

In some embodiments, the determining module 701 is configured to determine a first frame, in which the first frame includes first indication information and second indication information, the first indication information indicates whether the first STA supports an RTXS mode, the second indication information indicates a minimum transmission duration threshold or a reserved bit, and the minimum transmission duration threshold is used to determine whether the first STA performs RTXS after receiving an RTXS request sent by an AP. The sending module 702 is configured to send the first frame.

Optionally, the above determining module 701 is configured to execute at least one of communication steps (such as step 201, step 206, step 2061, step 2062, step 2063, step 207, step 501, step 501, step 5051, step 5052, step 5053, step 506, which is not limited herein) performed by the first STA 101 in any of the above methods, which is not repeated here. The sending module 702 is configured to execute at least one of transceiving steps (such as step 202, step 208, step 502, step 503, step 504, step 507, which is not limited herein) performed by the first STA 101 in any of the above methods, which is not repeated here.

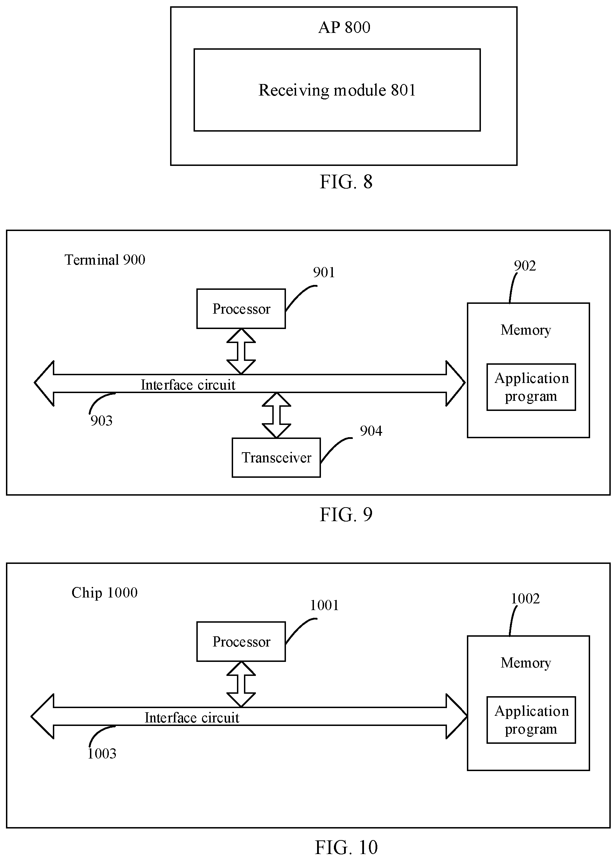

FIG. 8 is a schematic diagram of an AP provided in an embodiment of the present disclosure. As shown in FIG. 8, the AP 800 includes a receiving module 801.

In some embodiments, the receiving module 801 is configured to receive a first frame sent by a first STA, in which the first frame includes first indication information and second indication information; the first indication information indicates whether the first STA supports an RTXS mode, the second indication information indicates a minimum transmission duration threshold or a reserved bit, and the minimum transmission duration threshold is used to determine whether the first STA performs RTXS after receiving an RTXS request sent by the AP.

Optionally, the receiving module 801is configured to execute at least one of transceiving steps (such as step 204, step 205, step 209, step 211, step 214, step 601, step 603, step 604, step 605, step 607, step 608, step 609, step 610, which is not limited herein) performed by the AP 102 in any of the above methods, which is not repeated here.

The AP 800 may include a processing module. The processing module is configured to execute at least one of communication steps (such as step 203, step 209, step 210, step 602, step 606, which is not limited herein) performed by the AP 102 in any of the above methods, which is not repeated here.

FIG. 9 is a schematic diagram of a terminal 900 (e.g., a user equipment, etc.) provided in an embodiment of the present disclosure. The terminal 900 may be a chip, a chip system, or a processor that supports a network device to implement any of the above methods, or a chip, a chip system, or a processor that supports a terminal to implement any of the above methods. The terminal 900 may be used to implement the method described in the above method embodiments, and for details, reference may be made to the description in the above method embodiments.

As shown in FIG. 9, the terminal 900 includes one or more processors 901. The processor 901 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU, or a CU, etc.) to execute a program and process data of the program. The terminal 900 is configured to execute any of the above methods.

In some embodiments, the terminal 900 further includes one or more memories 902 for storing instructions. Optionally, all or part of the memory 902 may be outside the terminal 900.

In some embodiments, the terminal 900 further includes one or more transceivers 904. When the terminal 900 includes one or more transceivers 904, at least one of the communication steps (such as step 202, step 208, step 502, step 503, step 504, step 507, step 204, step 205, step 209, step 211, step 213, step 214, step 601, step 603, step 604, step 605, step 607, step 608, step 609, step 610, which is not limited herein) such as sending and/or receiving in the above methods is performed by the transceiver 904, and at least one of the other steps (such as step 201, step 206, step 2061, step 2062, step 2063, step 207, step 212, step 215, step 501, step 501, step 5051, step 5052, step 5053, step 506, step 203, step 209, step 210, step 602, step 606, which is not limited herein) is performed by the processor 901.

In some embodiments, the transceiver may include a receiver and a transmitter, and the receiver and/or the transmitter may be separate or integrated. Optionally, the terms such as "transceiver", "transceiver unit", "transceiver machine", "transceiver circuit", etc. may be exchangeable with each other, the terms such as "transmitter", "transmitting unit", "transmitting machine", "transmitting circuit", etc. may be exchangeable with each other, and the terms such as "receiver", "receiving unit", "receiver", "receiving circuit", etc. may be exchangeable with each other.

In some embodiments, the terminal 900 further includes one or more interface circuits 903, which are connected to the memory 902. Optionally, the interface circuit 903 may be used to receive signals from the memory 902 or other apparatuses, and may be used to send signals to the memory 902 or other apparatuses. For example, the interface circuit 903 may read instructions stored in the memory 902 and send the instructions to the processor 901.

The terminal 900 described in the above embodiments may be the UE or other communication devices, but the scope of the terminal 900 described in the present disclosure is not limited thereto, and the structure of the terminal 900 may not be limited by FIG. 9. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 10 is a schematic diagram of a chip 1000 disclosed in an embodiment of the present disclosure. In case where the terminal 1300 may be a chip or a chip system, reference may be made to the schematic diagram of the chip 1000 shown in FIG. 10, but the present disclosure is not limited thereto.

The chip 1000 includes one or more processors 1001, and the chip 1000 is used to execute any of the above methods.

In some embodiments, the chip 1000 further includes one or more interface circuits 1003. Optionally, the interface circuit 1003 is connected to the memory 1002, and may be used to receive signals from the memory 1002 or other apparatuses, and the interface circuit 1003 may be used to send signals to the memory 1002 or other apparatuses. For example, the interface circuit 1003 may read instructions stored in the memory 1002 and send the instructions to the processor 1001.

In some embodiments, the interface circuit 1003 performs at least one of the communication steps (for example, step 202, step 208, step 502, step 503, step 504, step 507, step 204, step 205, step 209, step 211, step 213, step 214, step 601, step 603, step 604, step 605, step 607, step 608, step 609, step 610, which is not limited herein) such as "sending and/or receiving" in the above method. The processor 1001 performs at least one of the other steps (for example, step 201, step 206, step 2061, step 2062, step 2063, step 207, step 212, step 215, step 501, step 501, step 5051, step 5052, step 5053, step 506, step 203, step 209, step 210, step 602, step 606,, which is not limited herein).

In some embodiments, the terms such as "interface circuit", "interface", "transceiver pin", "transceiver" may be exchangeable with each other.

In some embodiments, the chip 1000 further includes one or more memories 1002 for storing instructions. Optionally, all or part of the memory 1002 may be outside the chip 1000.

The present disclosure also includes a storage medium, on which instructions are stored, and when the instructions are executed on the terminal 900, the terminal 900 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also provides a program product, which, when executed by the terminal 900, enables the terminal 900 to execute any of the above methods. Optionally, the program product is a computer program product.

The present disclosure also provides a computer program, which, when executed on a computer, causes the computer to execute any one of the above methods.

## Claims

1. A communication method, performed by a first station (STA), comprising:
determining a first frame, wherein the first frame comprises first indication information and second indication information;
wherein the first indication information indicates whether the first STA supports a reverse transmission opportunity sharing (RTXS) mode, the second indication information indicates a minimum transmission duration threshold or a reserved bit, and the minimum transmission duration threshold is used to determine whether the first STA performs RTXS after receiving an RTXS request sent by an access point (AP); and
sending the first frame.

2. The method according to claim 1, wherein
the first frame further comprises third indication information, wherein the third indication information indicates whether the first STA is set with the minimum transmission duration threshold;
wherein the third indication information is set to be a first parameter value, and the first frame comprises the second indication information; or the third indication information is set to be a second parameter value, and the first frame comprises the reserved bit.

3. The method according to claim 2, further comprising:
receiving a second frame, wherein the second frame comprises fourth indication information, and the fourth indication information indicates whether the AP supports the RTXS mode.

4. The method according to claim 3, further comprising:
in a case where both the first STA and the AP support the RTXS mode, receiving the RTXS request sent by the AP within a transmission opportunity (TXOP) obtained by the first STA, wherein the RTXS request comprises a first duration required for the AP to perform a low-latency service transmission with a second STA; and
determining whether to share a transmission duration with the AP;
wherein in a case where a first remaining transmission duration within the TXOP is greater than the minimum transmission duration threshold, it is determined to share the transmission duration with the AP;
in a case where the first remaining transmission duration is less than or equal to the minimum transmission duration threshold, it is determined not to share the transmission duration with the AP.

5. The method according to claim 4, wherein,
in a case of determining to share the transmission duration with the AP, determining a third frame, wherein the third frame comprises fifth indication information, and the fifth indication information indicates a first transmission duration shared by the first STA with the AP; and
sending the third frame to instruct the AP to perform the low-latency service transmission with the second STA within the first transmission duration;
wherein the minimum transmission duration threshold comprises at least a sum of a second duration required to send the third frame, a third duration required for the AP to send a request to send (RTS) frame to the second STA, a fourth duration required for the second STA to send a clear to send (CTS) frame to the AP, and three short inter-frame spaces (SIFSs).

6. The method according to claim 5, wherein,
the first remaining transmission duration is greater than or equal to the second transmission duration, and the first transmission duration is the second transmission duration; or the first remaining transmission duration is less than the second transmission duration, and the first transmission duration is the first remaining transmission duration;
wherein the second transmission duration comprises at least a sum of the first duration, the second duration, the third duration, the fourth duration, a fifth duration required for the second STA to send an acknowledgement (ACK) frame to the AP, and four SIFSs.

7. The method according to claim 1 or 2, wherein the first indication information is carried in an ultra-high reliability medium access control (UHR MAC) capability information field of the first frame;
the UHR MAC capability information field is carried in a UHR capability element of the first frame;
wherein the first indication information is set to be a third parameter value, and the first indication information indicates that the first STA supports the RTXS mode; or the first indication information is set to be a fourth parameter value, and the first indication information indicates that the first STA does not support the RTXS mode.

8. The method according to claim 1 or 2, wherein the second indication information is carried in a UHR operation information field of the first frame;
the UHR operation information field is carried in a UHR operation element of the first frame.

9. The method according to claim 2, wherein the third indication information is carried in a UHR operation parameter field of the first frame;
the UHR operation parameter field is carried in a UHR operation element of the first frame.

10. The method according to claim 5, wherein after the first transmission duration is reached, the method further comprises:
determining that there is still a remaining transmission duration within the TXOP, and continuing to perform a data transmission within a second remaining transmission duration; or determining that there is no remaining transmission duration within the TXOP, and reacquiring a TXOP;
wherein the second remaining transmission duration is set to be a difference between the first remaining transmission duration and the first transmission duration.

11. A communication method, performed by an access point (AP), comprising:
receiving a first frame sent by a first station (STA), wherein the first frame comprises first indication information and second indication information;
wherein the first indication information indicates whether the first STA supports a reverse transmission opportunity sharing (RTXS) mode, the second indication information indicates a minimum transmission duration threshold or a reserved bit, and the minimum transmission duration threshold is used to determine whether the first STA performs RTXS after receiving an RTXS request sent by the AP.

12. The method according to claim 11, wherein,
the first frame further comprises third indication information, wherein the third indication information indicates whether the first STA is set with the minimum transmission duration threshold;
wherein the third indication information is set to be a first parameter value, and the first frame comprises the second indication information; or the third indication information is set to be a second parameter value, and the first frame comprises the reserved bit.

13. The method according to claim 12, further comprising:
determining a second frame, wherein the second frame comprises fourth indication information, and the fourth indication information indicates whether the AP supports the RTXS mode; and
sending the second frame.

14. The method according to claim 13, further comprising:
in a case where both the first STA and the AP support the RTXS mode, sending, within a transmission opportunity (TXOP) obtained by the first STA, the RTXS request to the first STA to instruct the first STA to determine whether to share a transmission duration with the AP;
wherein the RTXS request comprises a first duration required for the AP to perform a low-latency service transmission with a second STA;
in a case where a first remaining transmission duration within the TXOP is greater than the minimum transmission duration threshold, the first STA determines to share the transmission duration with the AP;
in a case where the first remaining transmission duration is less than or equal to the minimum transmission duration threshold, the first STA determines not to share the transmission duration with the AP.

15. The method according to claim 14, further comprising:
receiving a third frame, wherein the third frame comprises fifth indication information, and the fifth indication information indicates a first transmission duration shared by the first STA with the AP; and
performing, by the AP, the low-latency service transmission with the second STA within the first transmission duration;
wherein the minimum transmission duration threshold comprises at least a sum of a second duration required for the first STA to send the third frame, a third duration required to send a request to send (RTS) frame to the second STA, a fourth duration required for the second STA to send a clear to send (CTS) frame to the AP, and three short inter-frame spaces (SIFSs).

16. The method according to claim 15, wherein,
the first remaining transmission duration is greater than or equal to the second transmission duration, and the first transmission duration is the second transmission duration; or the first remaining transmission duration is less than the second transmission duration, and the first transmission duration is set to be the first remaining transmission duration;
wherein the second transmission duration comprises at least a sum of the first duration, the second duration, the third duration, the fourth duration, a fifth duration required for the second STA to send an acknowledgement (ACK) frame to the AP, and four SIFSs.

17. The method according to claim 16, wherein performing the low-latency service transmission with the second STA within the second transmission duration comprises:
determining a fourth frame, wherein the fourth frame comprises sixth indication information, the sixth indication information indicates a third transmission duration for the AP to perform the low-latency service transmission with the second STA;
wherein the sixth indication information is carried in a first duration field of the fourth frame, and the third transmission duration is set to be a duration obtained by subtracting the third duration and an SIFS from the first transmission duration; and sending the fourth frame to the second STA.

18. The method according to claim 17, wherein after sending the fourth frame to the second STA, the method further comprises:
receiving a fifth frame sent by the second STA, wherein the fifth frame comprises seventh indication information, the seventh indication information indicates a fourth transmission duration for the AP to perform the low-latency service transmission with the second STA, and the seventh indication information is carried in a second duration field of the fifth frame;
wherein the fourth transmission duration is set to be a duration obtained by subtracting the fourth duration and an SIFS from the third transmission duration.

19. The method according to claim 18, wherein during the low-latency service transmission performed by the AP with the second STA, a further STA updates its network allocation vector (NAV) to be the fourth transmission duration;
the further STA is a STA other than the first STA and the second STA in a basic service set (BSS) where the first STA, the AP, and the second STA are located.

20. A station (STA), wherein the STA is a first STA and comprises:
a determining module, configured to determine a first frame, wherein the first frame comprises first indication information and second indication information;
wherein the first indication information indicates whether the first STA supports a reverse transmission opportunity sharing (RTXS) mode, the second indication information indicates a minimum transmission duration threshold or a reserved bit, and the minimum transmission duration threshold is used to determine whether the first STA performs RTXS after receiving an RTXS request sent by an access point (AP); and
a sending module, configured to send the first frame.

21. An access point (AP), comprising:
a receiving module, configured to receive a first frame sent by a first station (STA), wherein the first frame comprises first indication information and second indication information;
wherein the first indication information indicates whether the first STA supports a reverse transmission opportunity sharing (RTXS) mode, the second indication information indicates a minimum transmission duration threshold or a reserved bit, and the minimum transmission duration threshold is used to determine whether the first STA performs RTXS after receiving an RTXS request sent by the AP.

22. A station (STA), wherein the STA is a first STA and comprises:
one or more processors;
wherein the STA is configured to perform the communication method according to any one of claims 1 to 10.

23. An access point (AP), comprising:
one or more processors;
wherein the AP is configured to perform the communication method according to any one of claims 11 to 19.

24. A communication system, comprising a first station (STA), an access point (AP), and a second STA, wherein the first STA is configured to perform the communication method according to any one of claims 1 to 10, and the AP is configured to perform the communication according to any one of claims 11 to 19.

25. A storage medium having instructions stored thereon, wherein when the instructions are executed on a communication device, the communication device is caused to perform the communication method according to any one of claims 1 to 10 or the communication method according to any one of claims 11 to 19.
